# EUROPÄISCHE PATENTSCHRIFT

(11) **EP 1 508 721 B1**
(45) Veröffentlichungstag und Bekanntmachung des Hinweises auf die Patenterteilung: **03.01.2007**
(21) Anmeldenummer: 04017803.0
(22) Anmeldetag: 28.07.2004
(51) Int. Cl.: F16F 9/02, F16F 9/06, F16F 9/32, F16F 9/346, F16F 9/512

(54) **Gasfeder**
Gas spring
Ressort à gaz

(30) Priorität: 22.08.2003 DE 10339188
(43) Veröffentlichungstag der Anmeldung: 23.02.2005
(73) Patentinhaber: SUSPA Holding GmbH, 90518 Altdorf (DE); Bayerische Motoren Werke Aktiengesellschaft, 80788 München (DE)
(72) Erfinder: Keller, Arno, 81543 München (DE); Heydenreich, Bertram, 85579 Neubiberg (DE); Krog, Andreas, 90610 Winkelhaid (DE)
(74) Vertreter: Hofmann, Matthias

(56) Entgegenhaltungen:
- EP-A- 0 781 938
- EP-A- 0 806 587
- DE-A- 2 718 800
- DE-A- 3 134 536
- DE-A- 3 301 544
- DE-A- 19 649 836
- DE-A- 19 702 628
- DE-A- 19 842 155
- DE-A- 19 846 373
- DE-C- 10 200 073

## Beschreibung

Die Erfindung betrifft eine Gasfeder nach dem Oberbegriff des Anspruches 1.

Gasfedern mit gedämpfter Hubbewegung eines internen Dämpfungskolbens sind durch offenkundige Vorbenutzung bekannt, insbesondere zur Dämpfung einer Schließbewegung einer Front- beziehungsweise Heckklappe eines Kraftfahrzeugs. Ein Durchschlagen eines Schließelements, dessen Schließbewegung mit dem Dämpfer gedämpft werden soll, kann bei den bekannten Gasfedern nicht immer mit Sicherheit verhindert werden. Um Beschädigungen zu vermeiden, die ein solches Durchschlagen mit sich führen kann, müssen daher aufwendige Zusatzmaßnahmen getroffen werden. Hierzu gehören zum Beispiel elastische Anschlagpuffer oder auch das Vorhalten eines ausreichenden Spiels zwischen aneinander angrenzenden Bauteilen. Aus Kosten- beziehungsweise Designgründen sind diese Maßnahmen nicht wünschenswert.

Aus der DE 33 01 544 A1 ist eine Gasfeder der eingangs genannten Art bekannt. Weitere Gasfedern mit einer wegabhängigen Dämpfung einer Hubbewegung des Dämpfungskolbens sind bekannt aus der DE 31 34 536 A, der DE 27 18 800 A sowie der DE 102 00 073 C1.

Aus der DE 196 49 836 A1 ist eine Gasfeder mit einer geschwindigkeitsabhängigen Dämpfungseinrichtung bekannt, wobei die geschwindigkeitsabhängige Dämpfungseinrichtung oberhalb einer maximalen Ausfahrgeschwindigkeit wirksam wird und die Bewegungsgeschwindigkeit der Kolbenstange auf ein gewünschtes Maß begrenzt. Eine derartig ausgebildete Gasfeder verhindert ein unkontrolliertes Öffnen einer Fahrzeugklappe, beispielsweise einer nicht ordnungsgemäß geschlossenen Fronthaube, indem die Bewegungsgeschwindigkeit der Kolbenstange auf ein niedriges Maß reduziert oder die Kolbenstange blockiert wird.

Es ist eine Aufgabe der vorliegenden Erfindung, eine Gasfeder derart weiterzubilden, dass ein gut kontrollierbares Hubverhalten erreicht wird.

Diese Aufgabe ist erfindungsgemäß gelöst durch eine Gasfeder mit den im Kennzeichnungsteil des Anspruchs 1 angegebenen Merkmalen.

Kern der Erfindung ist zunächst die Integration einer geschwindigkeitsabhängigen Dämpfungseinrichtung in die Gasfeder. Ein Dämpfer mit einer geschwindigkeitsabhängigen Dämpfung ist bekannt aus der DE 198 46 373 A1. Bei hohen Schließgeschwindigkeiten erfolgt bei einem solchen Dämpfer eine stark erhöhte Dämpfung, die bis zu einer vollständigen Blockierung gehen kann. Hierdurch kann, wenn ein derartiger Dämpfer im Zusammenhang mit einer Schließeinrichtung eingesetzt wird, der Schließkomfort beeinträchtigt werden. Um dies zu vermeiden, werden geschwindigkeitsabhängige Dämpfungseinrichtungen in der Regel so ausgelegt, dass sie erst ab einer relativ hohen Geschwindigkeit der Hubbewegung aktiv werden. Hierdurch kann ein Durchschlagen eines Schließelements, dessen Schließbewegung mit dem Dämpfer gedämpft werden soll, nicht immer mit Sicherheit verhindert werden. Die Dämpfungseinrichtung nach der DE 198 46 373 A1 wurde daher erfindungsgemäß durch Integration einer wegabhängigen Dämpfungseinrichtung weiterentwickelt. Erfindungsgemäß wurde erkannt, dass eine Gasfeder, bei der zusätzlich zur geschwindigkeitsabhängigen Dämpfung auch eine wegabhängige Dämpfung bereitgestellt wird, hinsichtlich der Kontrollierbarkeit der Hubbewegung ihres Dämpfungskolbens optimal an die jeweiligen Einbau-Anforderungen angepasst werden kann. Wird die erfindungsgemäße Gasfeder bei einer Front- oder Heckklappe eingesetzt, so kann ein Klappen-Endanschlag erreicht werden, dessen Dämpfungscharakteristik gleichzeitig von der Schließgeschwindigkeit und vom Schließweg abhängt. Vor dem Erreichen des Schlosses kann auf diese Weise zum Beispiel aufgrund der zusätzlichen wegabhängigen Dämpfung in sicherer Weise eine Vergrößerung der Dämpfung erreicht werden, sodass die Reduktion der Schließgeschwindigkeit auf einen Schließwert erreicht werden kann, der weit unter der Auslöseschwelle für die geschwindigkeitsabhängige Dämpfung liegt. Es resultiert eine Gasfeder mit einem gut kontrollierbaren und sicheren Betriebsverhalten. Beim Einsatz in einer Front- beziehungsweise Heckklappe wird insbesondere ein Durchschlagen der Klappe verhindert. Bauteile wie zum Beispiel Anschlagpuffer zum Durchschlagschutz können entfallen. Zwischen benachbarten Bauteilen muss kein erhöhtes Fugenmaß mehr vorgesehen sein. Die Dämpfungscharakteristik kann mit Hilfe der geschwindigkeitsabhängigen Dämpfungseinrichtung einerseits und der wegabhängigen Dämpfungseinrichtung andererseits so eingestellt werden, dass der akustische Komfort bei einer Hubbewegung der Gasfeder erhöht ist. Zusätzliche Maßnahmen zur Reduzierung der Produktionstoleranzen können entfallen.

Eine Gasfeder nach Anspruch 2 bietet insbesondere im Bereich der Endlage der Einschubbewegung eine erhöhte Dämpfung, sodass dort eine Beschädigung durch ein Aneinanderstoßen von Bauteilen aufgrund eines Erreichens der Endlage vermieden werden kann.

Eine mehrstufige Dämpfung nach Anspruch 3 lässt sich variabel an das jeweilige Einsatzfeld der Gasfeder anpassen.

Eine wegabhängige Dämpfungseinrichtung nach Anspruch 4 oder 5 ist fertigungstechnisch mit geringem Aufwand realisierbar.

Hierbei lässt sich bei der Ausgestaltung nach Anspruch 6 in einfacher Weise eine mehrstufige Dämpfung erzielen.

Eine Längsnut nach Anspruch 7 ist eine besonders einfache Variante einer als Dämpfungs-Durchlass ausgeführten wegabhängigen Dämpfungseinrichtung.

Ausgestaltungen der Gasfeder nach den Ansprüchen 8 bis 10 führen dazu, dass diese auch bei stark unterschiedlichen Temperaturen, zum Beispiel beim Einsatz in einem Kraftfahrzeug, sich immer reproduzierbar verhält.

Weitere Merkmale, Vorteile und Einzelheiten der Erfindung ergeben sich aus der nachfolgenden Beschreibung eines Ausführungsbeispiels anhand der Zeichnung. Es zeigt:
- Fig. 1: einen Längsschnitt durch eine Gasfeder;
- Fig. 2: den Dämpfungskolben der Gasfeder in stark vergrößerter Darstellung in einer Ruheposition;
- Fig. 3: eine Ventilscheibe in Draufsicht;
- Fig. 4: den Dämpfungskolben bei einer geringen Einschubgeschwindigkeit;
- Fig. 5: den Dämpfungskolben bei hoher Einschubgeschwindigkeit;
- Fig. 6: den Dämpfungskolben bei geringer Ausfahrgeschwindigkeit;
- Fig. 7: den Dämpfungskolben bei hoher Ausfahrgeschwindigkeit;
- Fig. 8: eine nicht maßstabsgerechte, unterbrochene Ausschnittsvergrößerung eines Gehäuserohrs der Gasfeder von Fig. 1;
- Fig. 9: einen Schnitt gemäß Linie IX-IX in Fig. 8;
- Fig. 10: eine unterbrochene Aufsicht auf eine Innenwand des Gehäuserohrs im Bereich des in Fig. 8 dargestellten Ausschnitts; und
- Fig. 11: ein Diagramm, welches den Hub sowie die Geschwindigkeit einer Einfahrbewegung eines Dämpfungskolbens in das Gehäuse der Gasfeder als Funktion der Zeit wiedergibt.

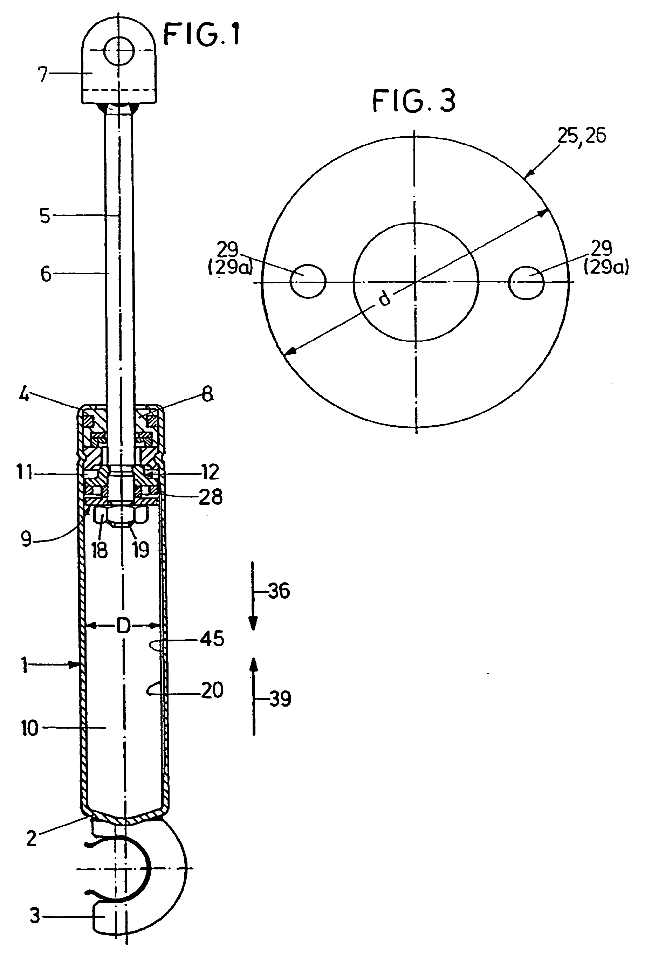

Die in Fig. 1 dargestellte Gasfeder, bei der es sich beispielsweise um eine Heckklappen-Gasfeder handelt, weist ein im Wesentlichen zylindrisches, also durch ein Rohr gebildetes Gehäuse 1 auf, das an einem Ende durch einen Boden 2 verschlossen ist. Das Gehäuse 1 ist mit Druckgas gefüllt, welches einen Kraftspeicher für die Gasfeder darstellt. Am Boden 2 ist ein krallenartiges Befestigungselement 3 angebracht. Aus seinem dem Boden 2 entgegengesetzten Ende 4 ist eine koaxial zur Mittel-Längs-Achse 5 des Gehäuses 1 angeordnete Kolbenstange 6 aus dem Gehäuse 1 herausgeführt. Sie trägt an ihrem äußeren freien Ende ein weiteres Befestigungselement 7. Am Ende 4 ist die Kolbenstange 6 mittels einer Führungs- und DichtungsEinheit 8 in Richtung der Achse 5 verschiebbar, aber gas- und flüssigkeitsdicht geführt.

An dem im Innenraum des Gehäuses 1 befindlichen Ende der Kolbenstange 6 ist ein Dämpfungskolben 9 angebracht, der weiter unten im einzelnen beschrieben wird. Dieser Dämpfungskolben 9 teilt den Innenraum des Gehäuses 1 in zwei Gehäuse-Teilräume 10, 11, von denen der Teilraum 10 zwischen dem Dämpfungskolben 9 und dem Boden 2 und der Teilraum 11 zwischen dem Dämpfungskolben 9 und der Führungs- und Dichtungseinheit 8 ausgebildet ist. Mit Ausnahme noch zu beschreibender Dämpfungseinrichtungen sind solche Gasfedern bekannt und marktüblich.

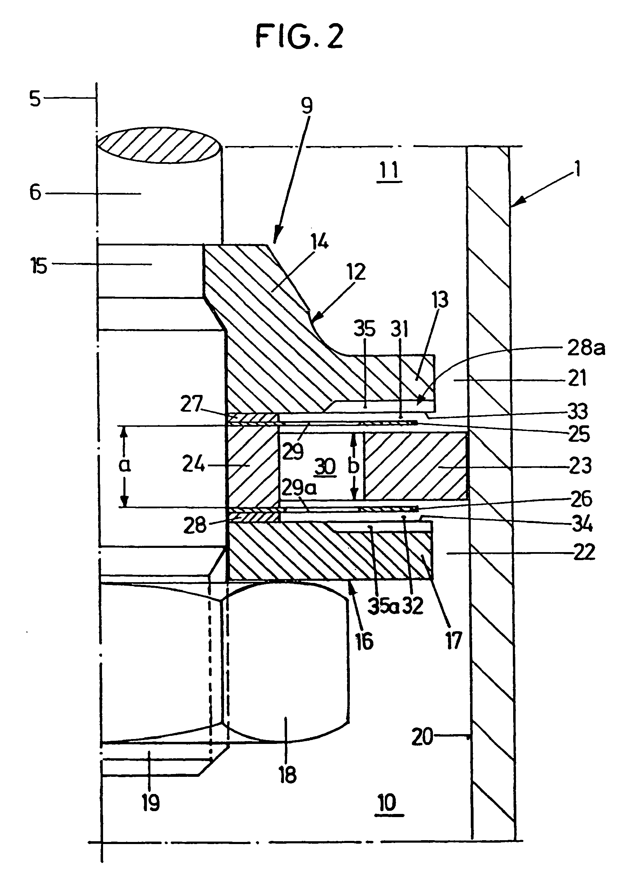

Wie Fig. 2 entnehmbar ist, ist der Dämpfungskolben mehrteilig ausgebildet. Er weist ein Druck-Kolbenteil 12 auf, dessen funktionswesentliches Teil eine Ringscheibe 13 ist, an der eine Befestigungsbüchse 14 ausgebildet ist, die in eine Ringnut 15 der Kolbenstange 6 eingerollt ist, sodass das Kolbenteil 12 in Richtung der Achse 5 fest auf der Kolbenstange 6 angebracht ist. Durch dieses Kolbenteil 12 wird der Dämpfungskolben 9 zum Teilraum 11 hin begrenzt.

Zum Teilraum 10 hin wird der Dämpfungskolben 9 durch ein Zug-Kolbenteil 16 begrenzt, das nach Art einer Zylinder-Ringscheibe 17 aufgebaut ist, die gleichermaßen wie die Ringscheibe 13 radial zur Achse 5 spielfrei auf der Kolbenstange 6 angeordnet ist. In Richtung der Achse 5 zum Teilraum 10 hin wird das Zug-Kolbenteil 16 durch eine Mutter 18 gehalten, die auf einen entsprechenden Gewindeansatz 19 der Kolbenstange 6 geschraubt ist. Zwischen dem Druck-Kolbenteil 12 und dem Zug-Kolbenteil 16 und einer Innenwand 20 des Gehäuses 1 ist jeweils ein Ringspalt 21 bzw. 22 ausgebildet. Zwischen dem Kolbenteil 12 und dem Kolbenteil 16 ist ein weitgehend spielfreier, aber in Richtung der Achse 5 leicht verschiebbarer Ringkolben 23 angeordnet, der die Ringspalte 21, 22 überdeckt. Auf der Kolbenstange 6 ist mittig zwischen den Kolbenteilen 12 und 16 und auf gleicher Höhe mit dem Ringkolben 23 eine Distanzhülse 24 angeordnet. Beiderseits der Distanzhülse 24 liegen an dieser eine dem Druck-Kolbenteil 12 zugewandte Druck-Ventilscheibe 25 und eine dem Zug-Kolbenteil 16 zugewandte Zug-Ventilscheibe 26 an, zwischen denen und dem benachbarten Kolbenteil 12 bzw. 16 jeweils eine ringförmige Distanzscheibe 27 bzw. 28 angeordnet ist. Diese Distanzscheiben 27, 28 haben eine geringe Dicke in Richtung der Achse 5, von beispielsweise 0,25 mm. Mittels der Mutter 18 ist also das Paket aus Zug-Kolbenteil 16, Distanzscheibe 28, Zug-Ventilscheibe 26, Distanzhülse 24, Druck-Ventilscheibe 25, Distanzscheibe 27 und Druck-Kolbenteil 12 in Richtung der Achse 5 zusammengespannt. Gemeinsam mit dem Ringkolben 23 bildet dieses Paket eine Dämpfungseinrichtung 28a zur geschwindigkeitsabhängigen Dämpfung einer Hubbewegung des Dämpfungskolbens 9.

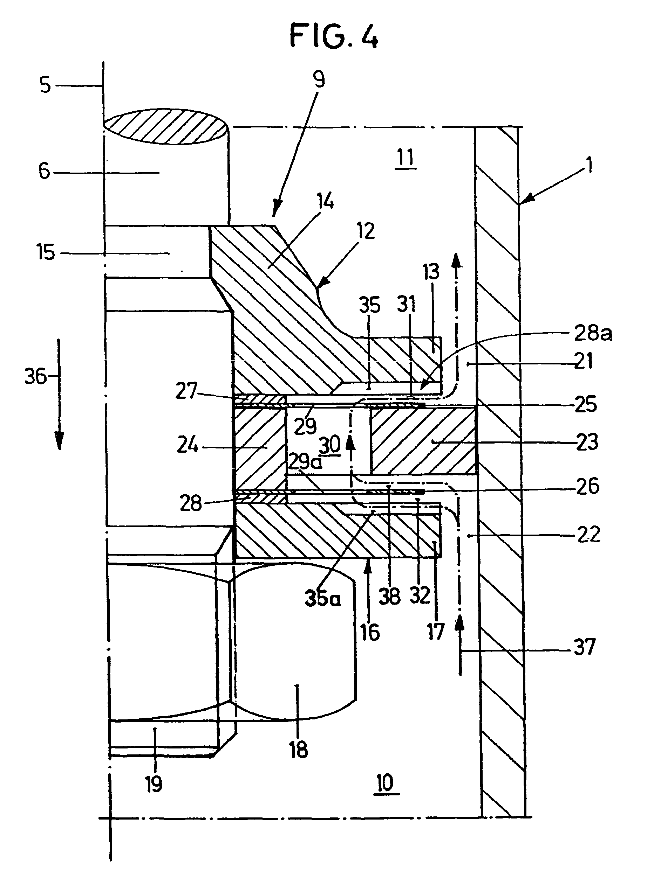

Wie unter anderem aus Fig. 3 hervorgeht, weisen die ringförmig ausgebildeten Ventilscheiben 25, 26 zwei Dämpfungsdurchlässe 29, 29a auf, die fluchtend mit dem zwischen der Distanzhülse 24 und dem Ringkolben 23 ausgebildeten Ringkanal 30 liegen. Die Dicke a der Distanzhülse 24 in Richtung der Achse 5 ist größer als die entsprechende Dicke b des Ringkolbens 23.

In dem in Fig. 2 dargestellten Ruhezustand des Dämpfungskolben 9 ist zwischen der Druck-Ventilscheibe 25 und dem Druck-Kolbenteil 12 ein der Dicke der Distanzscheibe 27 entsprechender Radialkanal 31 ausgebildet, der den Ringkanal 30 mit dem Ringspalt 21 verbindet. Zwischen der Zug-Ventilscheibe 26 und dem Zug-Kolbenteil 16 ist im Ruhezustand ein Radialkanal 32 ausgebildet, der den Ringkanal 30 mit dem Ringspalt 22 verbindet. Die Ventilscheiben 25, 26 bestehen aus Federstahl und sind sehr dünn, beispielsweise 0,1 mm dick. Der Außendurchmesser d der Ventilscheiben 25, 26 ist kleiner als der Innendurchmesser D des Gehäuses 1. In den der jeweiligen Ventilscheibe 25 bzw. 26 zugewandten Stirnseiten 33, 34 der Kolbenteile 12 bzw. 16 können radial zur Achse 5 verlaufende Bypass-Kanäle 35, 35a ausgebildet sein, die dem jeweiligen Dämpfungs-durchlass 29 zugeordnet sind, sich also mit diesem radial zur Achse 5 überdecken und in den jeweiligen Ringspalt 21, 22 münden.

Die Wirkungsweise der geschwindigkeitsabhängigen Dämpfungseinrichtung 28a der Gasfeder wird nachfolgend anhand der Fig. 4 bis 7 näher erläutert.

In Fig. 4 ist die Position der verschiedenen Teile des Dämpfungskolbens 9 dargestellt, wenn die Kolbenstange 6 in Einschubrichtung 36 entgegen der Rückstellkraft der Druckgas-Füllung in das Gehäuse 1 eingeschoben wird und zwar mit einer Geschwindigkeit unterhalb einer zur weitgehenden Blockierung der Gasfeder führenden Geschwindigkeit. Hierbei liegt der Ringkolben 23 gegen die Druck-Ventilscheibe 25 an, ohne diese nennenswert in Richtung der Achse 5 zu verbiegen. Da der Ringkolben 23 eine geringere axiale Erstreckung hat als die Distanzhülse 24, strömt Dämpfungsflüssigkeit entsprechend der Strömungslinie 37 aus dem Gehäuse-Teilraum 10 durch den Ringspalt 22, den Radialkanal 32, die Dämpfungsdurchlässe 29 in der Zug-Ventilscheibe 26, den Ringkanal 30, die Dämpfungsdurchlässe 29 in der Druck-Ventilscheibe 25, den Radialkanal 31 und den Ringspalt 21 in den Gehäuse-Teilraum 11. Außerdem fließt Dämpfungsfluid aus dem Ringspalt 22 außen um die Zug-Ventilscheibe 26 und einen Radialkanal 38 zwischen der Zug-Ventilscheibe 26 und dem Ringkolben 23 zum Ringkanal 30. Der Ringkolben 23 liegt hierbei dicht an dem außerhalb der Dämpfungsdurchlässe 29 befindlichen Bereich der Druck-Ventilscheibe 25 an.

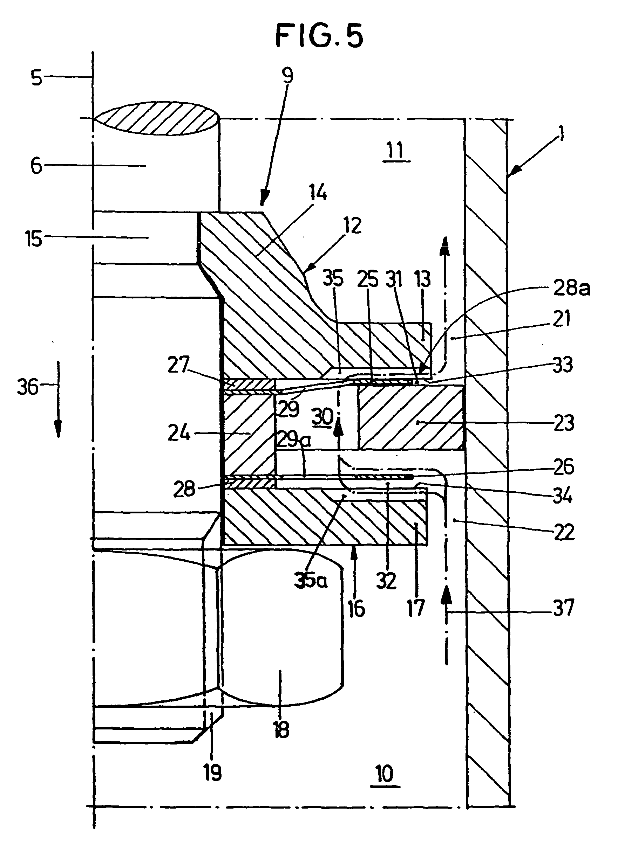

Wenn die Einschubgeschwindigkeit der Kolbenstange 6 in Einschubrichtung 36 über ein vorgegebenes Maß hinaus gesteigert wird, dann wird der Druck des Dämpfungsfluids auf den Ringkolben 23 einerseits und die Druck-Ventilscheibe 25 andererseits so groß, dass gemäß Fig. 5 die Druck-Ventilscheibe 25 zum Druck-Kolbenteil 12 ausgelenkt wird und sich dichtend gegen dessen Stirnseite 33 anlegt, wie in Fig. 5 dargestellt ist. Da damit der Radialkanal 31 bis auf die Bypass-Kanäle 35 geschlossen ist, nimmt die Dämpfungskraft sprungartig zu. Bei einer Variante der Gasfeder kann die Dämpfungskraft bis in den Bereich einer Blockierung der Gasfeder gehen, wenn beispielsweise keine Bypass-Kanäle 35 vorhanden sind und wenn die Undichtigkeiten im Gesamtbereich des Dämpfungskolbens 9 gering sind.

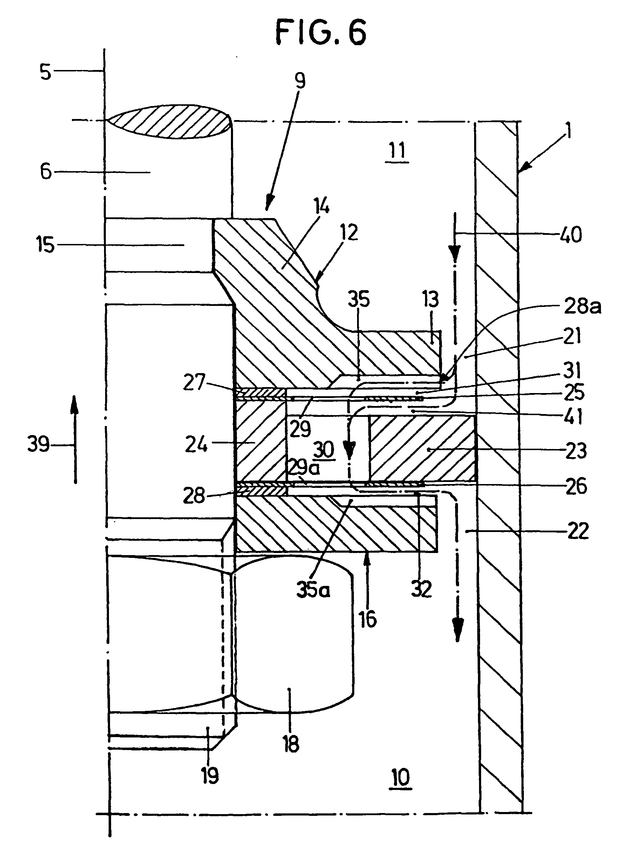

Wenn dagegen die Kolbenstange 6 mit geringer Geschwindigkeit entsprechend der Ausschubrichtung 39 aus dem Gehäuse 1 herausgezogen bzw. geschoben wird, legt sich der Ringkolben 23 entsprechend Fig. 6 gegen die Zug-Ventilscheibe 26, ohne diese in Richtung der Achse 5 zu verformen. Das Dämpfungsfluid fließt dann entsprechend der Strömungslinie 40 aus dem Gehäuse-Teilraum 11 durch den Ringspalt 21, den Radialkanal 31, die Dämpfungsdurchlässe 29 in der Druck-Ventilscheibe 25, den Ringkanal 30, die Dämpfungsdurchlässe 29a in der Zug-Ventilscheibe 26, den Radialkanal 32 und den Ringspalt 22 in den Gehäuse-Teilraum 10. Außerdem fließt Dämpfungsfluid aus dem Ringspalt 21 außen um die Druck-Ventilscheibe 25 und den zwischen dieser und dem Ringkolben 23 gebildeten Radialkanal 41 zum Ringkanal 30.

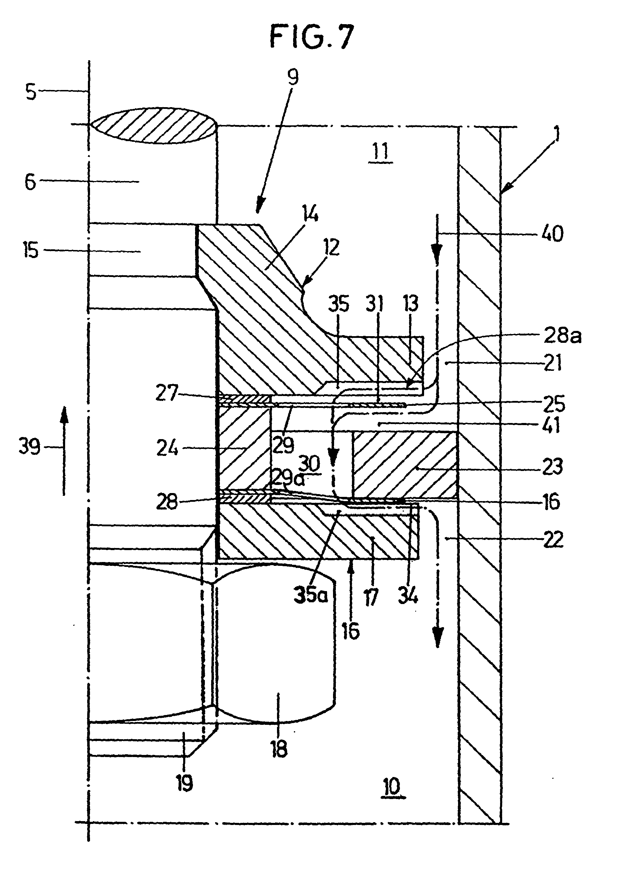

Wenn die Ausschubgeschwindigkeit ein vorgegebenes Maß überschreitet, dann wird der auf den Ringkolben 23 und die Zug-Ventilscheibe 26 wirkende Staudruck so groß, dass die Zug-Ventilscheibe 26 entsprechend der Darstellung in Fig. 7 zur Anlage an die Stirnseite 34 des Zug-Kolbenteils 16 kommt, sodass das Dämpfungsfluid nur noch durch die Bypass-Kanäle 35a in der Stirnseite 34 des Zug-Kolbenteils 16 in Richtung zum Gehäuse-Teilraum 10 strömen kann. Die Dämpfung steigt also stark an. Aus dem Vorstehenden wird deutlich, dass beim dargestellten Ausführungsbeispiel eine geschwindigkeitsabhängige Dämpfung sowohl beim Einschieben als auch beim Ausschieben der Kolbenstange 6 in das beziehungsweise aus dem Gehäuse 1 erreicht werden kann. Für viele Anwendungsfälle, bei denen nur beim Einschieben eine geschwindigkeitsabhängige Dämpfung erreicht werden soll, ist eine Ausführung der geschwindigkeitsabhängigen Dämpfungseinrichtung 28a ohne Zug-Kolbenteil 16 und ohne Zug-Ventilscheibe 26 möglich, sodass das Ausfahren der Kolbenstange bei dieser Ausführungsform nicht geschwindigkeitsabhängig gedämpft wird. Die hier gegebene Detailbeschreibung lässt sich ohne Weiteres auf eine Gasfeder übertragen, bei der nur die Einschubbewegung, nicht aber die Ausschubbewegung geschwindigkeitsabhängig gedämpft wird.

Wie sich aus dem Vorstehenden ergibt, wurden der Begriff "Druck-Kolbenteil 12" und "Druck-Ventilscheibe 25" gewählt, weil sie bei Druck auf die Gasfeder, also beim Einschieben der Kolbenstange 6 in das Gehäuse 1 in Funktion treten, während das "Zug-Kolbenteil 16" und die "Zug-Ventilscheibe 26" bei Zug auf die Gasfeder, also beim Ausfahren der Kolbenstange 6 aus dem Gehäuse 1, in Funktion treten.

Wie sich aus dem Vorstehenden weiterhin ergibt, kann die Einschub- bzw. Ausschubgeschwindigkeit der Kolbenstange 6, bei der der Sprung von einfacher Dämpfung auf eine angenäherte Blockierung eintritt, durch Veränderung der Dicke der Ventilscheiben 25 bzw. 26 verändert werden. Je dicker die Ventilscheiben 25, 26 sind, um so steifer sind sie, d.h. die Geschwindigkeit, bei der ein Übergang von der einfachen Dämpfung auf eine verstärkte Dämpfung eintritt, nimmt zu. Je dünner die Ventilscheibe 25 bzw. 26 ist, um so geringer wird diese Geschwindigkeit.

In gleicher Weise kann durch Veränderung der Dicke der Distanzscheiben 27, 28 in Richtung der Achse 5 der Weg in Richtung der Achse 5 verändert werden, den die jeweilige Ventilscheibe 25 bzw., 26 aus ihrer Ruhelage zurücklegen muss, bevor der jeweilige Radialkanal 31 bzw. 32 verschlossen wird. Da die zum Verformen der Ventilscheibe 25, 26 in Richtung der Achse 5 erforderliche, durch den geschilderten Staudruck gebildete Kraft mit dem Verformungsweg zunimmt, wird also der entsprechende Radialkanal 31 bzw. 32 bei geringerer Dicke der Distanzscheibe 27 bzw. 28 kleiner und umgekehrt.

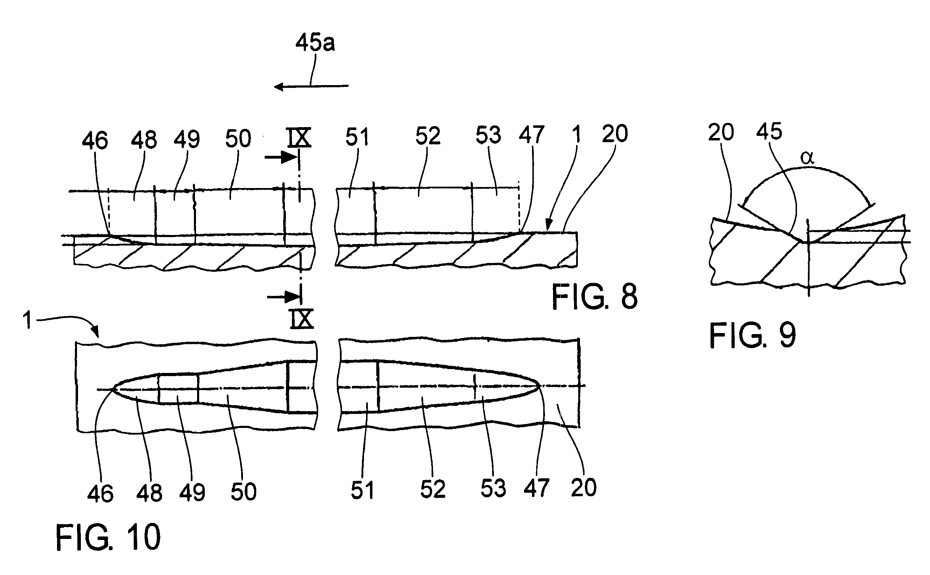

In der Innenwand 20 des Gehäuses 1 ist eine profilierte Längsnut 45 ausgebildet, die in den Fig. 8 bis 10 nicht maßstäblich und in übertriebener Vergrößerung, was ihre Breite und Tiefe angeht, dargestellt ist. Die Längsnut 45 stellt eine Dämpfungseinrichtung zur wegabhängigen Dämpfung einer Hubbewegung des Dämpfungskolbens 9 dar. Solange der Dämpfungskolben 9 in einer Stellung auf Höhe der Längsnut 45 vorliegt, stellt Letztere einen Dämpfungsfluid-Durchlass zwischen den beiden Gehäuse-Teilräumen 10, 11 dar. Sowohl der Querschnitt als auch die Tiefe der Längsnut 45 variieren längs der Längsnut 45. Eine Einschubrichtung ist in Fig. 8 mit einem Pfeil 45a angedeutet.

Zwischen einem Nutbeginn 46, welcher einer maximalen Einfahrstellung des Dämpfungskolbens 9 zugeordnet ist, und einem Nutende 47, welches einer maximalen Ausfahrstellung des Dämpfungskolbens 9 zugeordnet ist, weist die Längsnut 45 insgesamt sechs Nutbereiche auf. Nachfolgende Dimensionierungsangaben sind nur beispielhaft zu verstehen und sind von der jeweiligen Ausgestaltung der Gasfeder und zudem von den Anforderungen der jeweiligen Anwendung abhängig. In einem ersten Nutbereich 48, welcher sich an den Nutbeginn 46 anschließt, verbreitert und vertieft sich die Längsnut 45 nochmals bis hin zu einer Tiefe von etwa 0,1 mm. In einem sich hieran anschließenden zweiten Nutbereich 49 hat die Längsnut 45 konstanten Querschnitt und Tiefe. In einem sich hieran anschließenden dritten Nutbereich 50 erweitert und vertieft sich die Längsnut 45 bis hin zu einer Maximaltiefe von 0,35 mm. In einem sich hieran anschließenden vierten Nutbereich 51 bleiben Querschnitt und Tiefe der Längsnut wieder konstant. In einem sich hieran anschließenden fünften Nutbereich 52 verschmälert sich die Längsnut 45 und flacht bis hin zu einer Tiefe von etwa 0,1 mm ab. Die Länge des fünften Nutbereichs 52 ist vergleichbar zu derjenigen des dritten Nutbereichs 50. In einem sechsten Nutbereich 53 zwischen dem fünften Nutbereich 52 und dem Nutende 47 mündet die Längsnut 45 wieder in die Innenwand 20 des Gehäuses 1 aus. Für die wegabhängige Dämpfung im Bereich der Einschub-Endlage des Dämpfungskolbens 9 sind die Nutbereiche 48 bis 50 relevant.

Einen typischen Querschnitt der Längsnut 45 zeigt Fig. 9 im Bereich des vierten Nutbereichs 51. Der Boden der Längsnut 45 hat im Querschnitt einen Krümmungsradius von etwa 0,4 mm. Die beiden im Querschnitt in die Innenwand 20 ausmündenden Nut-Seitenwände haben einen Winkel α zueinander im Bereich von 120°.

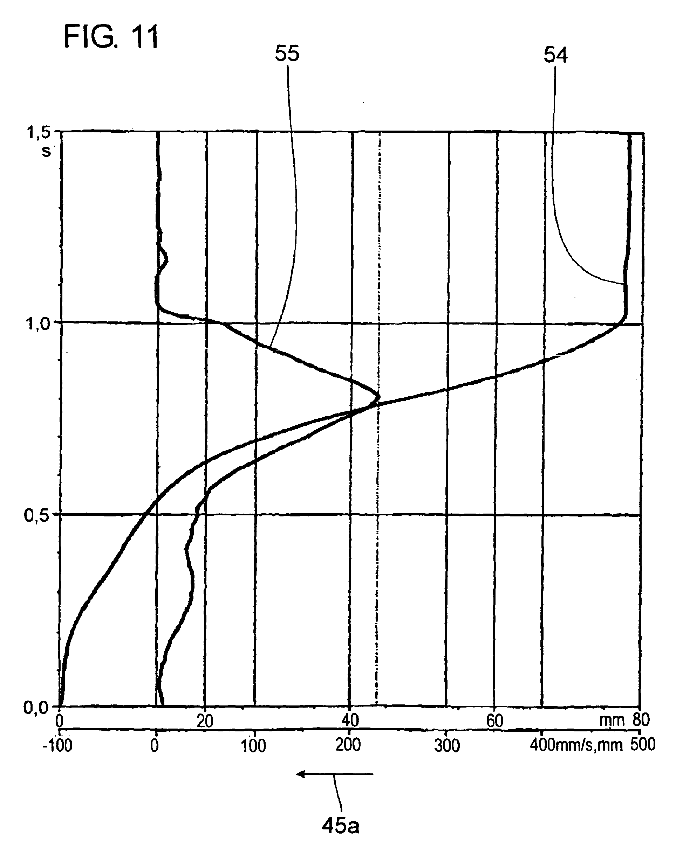

Die Funktion der wegabhängigen Dämpfung mittels der Längsnut 45 wird nachfolgend anhand des Diagramms nach Fig. 11 erläutert. Dieses zeigt am Beispiel eines Schließvorgangs einer Kraftfahrzeug-Heckklappe mit einer ersten Kurve 54 den zeitabhängigen Hub des Dämpfungskolbens 9 bei der Einfahrbewegung in Einfahrrichtung 45a in das Gehäuse 1, wobei auf der Querachse der Hub in mm und auf der Hochachse die Zeit in s aufgetragen ist. Schon aus der Hub-Kurve 54 wird deutlich, dass die Einfahr-Bewegung beim Schließen der Heckklappe zunächst im Bereich des vierten Nutbereichs 51 mit konstantem Nutquerschnitt aufgrund der potentiellen Energie der Heckklappe beschleunigt, um sich im Bereich des Nutendes 46, also der einfahrseitigen Endlage des Dämpfungskolbens 9 wieder zu verlangsamen. Im Bereich insbesondere des Nutendes 46 des Hubweges des Dämpfungskolbens 9 liegt also eine stärkere Dämpfung der Hubbewegung vor, als im Bereich des sonstigen Hubweges. Genauen Aufschluss über die Einfahrgeschwindigkeit gibt eine Hubgeschwindigkeits-Kurve 55, die ebenfalls in Fig. 11 eingetragen ist, wobei auf der Querachse die Geschwindigkeit in mm/s aufgetragen ist. Ausgehend vom Beginn der Einfahrbewegung mit Geschwindigkeit 0 beim Loslassen der Klappe steigt die Hubgeschwindigkeit im vierten Nutbereich 51 zunächst an, bis im Bereich des dritten Nutbereichs 50 eine maximale Hubgeschwindigkeit in Höhe von etwa 225 mm/s erreicht ist. Beim Durchlaufen des zweiten Nutbereichs 49 wird die Heckklappe kurzzeitig auf eine in etwa konstante Hubgeschwindigkeit im Bereich von etwa 30 mm/s abgebremst. Anschließend, ab dem Durchlaufen des zweiten Nutbereichs 49, sinkt die Hubgeschwindigkeit wieder ab, bis sie im Bereich des Nutendes 46 wieder den Wert 0 erreicht. Die wegabhängige Dämpfung durch die Längsnut 45 sorgt also für eine mehrstufige Änderung der Dämpfung der Hubbewegung des Dämpfungskolbens 9.

Das Ausfahrende des Dämpfungskolbens 9 wird durch die beschriebene Dämpfung ebenfalls kontrolliert und ohne harten Endanschlag erreicht.

Gleichzeitig zur Wirkung der wegabhängigen Dämpfung kommt bei Überschreitung eines Grenzwerts der Hubgeschwindigkeit noch die oben beschriebene geschwindigkeitsabhängige Dämpfungseinrichtung 28a zum Tragen, sodass das Überschreiten einer maximalen Hubgeschwindigkeit verhindert wird.

Als Dämpfungsfluid kann bei der Gasfeder nach den Fig. 1 bis 11 auch ein temperaturstabiles Öl auf synthetischer oder Silikon-Basis eingesetzt sein.

## Patentansprüche

1. Gasfeder
- mit einem zylindrischen Gehäuse (1), das eine Innenwand (20), eine Mittel-Längs-Achse (5), einen Boden (2) und ein dem Boden (2) entgegengesetztes Ende (4) aufweist,
- mit einer konzentrisch zur Mittel-Längs-Achse (5) angeordneten Kolbenstange (6), die aus dem Ende (4) durch eine Führungs- und Dichtungseinheit (8) aus dem Gehäuse (1) herausgeführt ist,
- mit einem Dämpfungskolben (9), der an dem im Gehäuse (1) befindlichen Ende der Kolbenstange (6) angeordnet ist und den Innenraum des Gehäuses (1) in zwei Gehäuse-Teilräume (10, 11) unterteilt,
- mit einer Druckgas-Füllung im Innenraum des Gehäuses (1),
- mit einer Dämpfungseinrichtung (45) zur wegabhängigen Dämpfung einer Hubbewegung des Dämpfungskolbens (9), **gekennzeichnet durch**
- eine weitere Dämpfungseinrichtung (28a) zur geschwindigkeitsabhängigen Dämpfung einer Hubbewegung des Dämpfungskolbens (9) die bei Überschreitung eines vorgegebenen Grenzwerts der Hubgeschwindigkeit und gleichzeitig mit der wegabhängigen Dämpfungseinrichtung (45) wirksam ist.

2. Gasfeder nach Anspruch 1, **dadurch gekennzeichnet, dass** die wegabhängige Dämpfungseinrichtung (45) so ausgeführt ist, dass im Bereich einer der beiden Endlagen (46) des Hubweges des Dämpfungskolbens (9) eine stärkere Dämpfung der Hubbewegung vorliegt als im Bereich (51) des sonstigen Hubweges.

3. Gasfeder nach Anspruch 1 oder 2, **gekennzeichnet durch** eine Ausführung der wegabhängigen Dämpfungseinrichtung (45) derart, dass eine mehrstufige Änderung der Dämpfung der Hubbewegung resultiert.

4. Gasfeder nach einem der Ansprüche 1 bis 3, **dadurch gekennzeichnet, dass** die wegabhängige Dämpfungseinrichtung (45) als Dämpfungsfluid-Durchlass zwischen den beiden Gehäuse-Teilräumen (10, 11) ausgeführt ist, dessen Querschnitt wegabhängig variiert.

5. Gasfeder nach Anspruch 4, **dadurch gekennzeichnet, dass** der Querschnitt des Dämpfungsfluid-Durchlasses im Bereich (48, 53) einer der beiden Endlagen (46) des Hubweges kleiner ist als im Bereich (51) des sonstigen Hubweges.

6. Gasfeder nach einem der Ansprüche 4 oder 5, **dadurch gekennzeichnet, dass** die Veränderung des Querschnitts der Dämpfungseinrichtung (45) über mehrere Stufen (48, 50) erfolgt.

7. Gasfeder nach einem der Ansprüche 4 bis 6, **dadurch gekennzeichnet, dass** der Dämpfungs-Durchlass als Längsnut (45) in einer Innenwand (20) des Gehäuses (1) ausgeführt ist, wobei zur Querschnittsvariation die Breite und/oder die Tiefe der Längsnut (45) variiert.

8. Gasfeder nach einem der Ansprüche 4 bis 6, **gekennzeichnet durch** ein temperaturstabiles Öl als Dämpfungsfluid.

9. Gasfeder nach Anspruch 8, **gekennzeichnet durch** ein Dämpfungsfluid auf synthetischer Basis.

10. Gasfeder nach Anspruch 8, **gekennzeichnet durch** ein Dämpfungsfluid auf Silikon-Basis.

## Claims

1. A gas spring, comprising
- a cylindrical casing (1) which has an inside wall (20), a central longitudinal axis (5), a bottom (2) and an end (4) opposite the bottom (2);
- a piston rod (6) which is concentric of the central longitudinal axis (5) and which is extended from the end (4) through a guide and seal unit (8) and out of the casing (1);
- a damping piston (9) which is disposed on an end, inside the casing (1), of the piston rod (6), inside dividing the casing (1) into two sectional casing chambers (10, 11);
- a filling of compressed gas inside the casing (1);
- a damping device (45) for path-dependent damping of a motion of stroke of the damping piston (9),
**characterized by**
- another damping device (28a) for velocity-dependent damping of a motion of stroke of the damping piston (9) which damping device (28a) is effective on exceeding a given limiting value of the velocity of stroke and with the path-dependent damping (45) device at the same time.

2. A gas spring according to claim 1, **characterized in that** the path-dependent damping device (45) is embodied for stronger damping of the motion of stroke in an area of two end positions (46) thereof than in an area (51) of the remaining stroke.

3. A gas spring according to claim 1 or 2, **characterized by** an embodiment of the path-dependent damping device (45) for multi-stage variation of damping of the motion of stroke.

4. A gas spring according to one of claims 1 to 3, **characterized in that** the path-dependent damping device (45) is embodied as a damping-fluid passage of path-dependently varying cross section between the two sectional casing chambers (10, 11).

5. A gas spring according to claim 4, **characterized in that** the cross section of the damping-fluid passage in the area (48, 53) of one of the two end positions (46) of the stroke is smaller than it is in the area (51) of the remaining stroke.

6. A gas spring according to one of claims 4 or 5, **characterized in that** variation of the cross section of the damping device (45) takes place in several steps (48, 50).

7. A gas spring according to one of claim 4 to 6, **characterized in that** the damping-fluid passage is a longitudinal groove (45) on an inside wall (20) of the casing (1), with the width and/or depth of the longitudinal groove (45) varying for cross-sectional variation.

8. A gas spring according to one of claims 4 to 6, **characterized by** a damping fluid in the form of temperature-resistant oil.

9. A gas spring according to claim 8, **characterized by** a synthetic-based damping fluid.

10. A gas spring according to claim 8, **characterized by** a silicone-based damping fluid.

## Revendications

1. Ressort pneumatique, comportant
- un corps cylindrique (1) pourvu d'une paroi intérieure (20), d'un axe longitudinal médian (5), d'un fond (2) et d'une extrémité (4) opposée au fond (2),
- une tige de piston (6) agencée concentriquement à l'axe longitudinal médian (5), qui sort de l'extrémité (4) du corps (1) par une unité de guidage et d'étanchéité (8),
- un piston d'amortissement (9), qui est agencé sur l'extrémité de la tige de piston (6) située dans le corps (1), et qui subdivise l'espace intérieur du corps (1) en deux espaces partiels (10, 11) de corps,
- un remplissage de gaz comprimé dans l'espace intérieur du corps (1),
- un dispositif d'amortissement (45) pour l'amortissement dépendant de la course d'un mouvement de levée du piston d'amortissement (9),
**caractérisé par**
- un autre dispositif d'amortissement (28a) pour l'amortissement dépendant de la vitesse d'un mouvement de levée du piston d'amortissement (9), qui agit lors du dépassement d'une valeur limite prédéterminée de la vitesse de levée, et simultanément avec le dispositif d'amortissement (45) dépendant de la course.

2. Ressort pneumatique selon la revendication 1, **caractérisé en ce que** le dispositif d'amortissement (45) agissant en fonction de la course est réalisé de telle sorte que, dans la zone de l'une des deux positions finales (46) de la course de levée du piston d'amortissement (9), le mouvement de levée soit plus fortement amorti que dans la zone (51) du reste de la course de levée.

3. Ressort pneumatique selon la revendication 1 ou 2, **caractérisé par** une réalisation du dispositif d'amortissement (45) agissant en fonction de course, de telle sorte qu'il en résulte une modification à plusieurs niveaux de l'amortissement du mouvement de levée.

4. Ressort pneumatique selon l'une quelconque des revendications 1 à 3, **caractérisé en ce que** le dispositif d'amortissement (45) agissant en fonction de la course est réalisé sous la forme d'un passage de fluide d'amortissement entre les deux espaces partiels (10, 11) de corps, dont la section transversale varie en fonction de la course.

5. Ressort pneumatique selon la revendication 4, **caractérisé en ce que**, dans la zone (48, 53) d'une des deux positions finales (46) de la course de levée, la section transversale du passage de fluide d'amortissement est plus petite que dans la zone (51) du reste de la course de levée.

6. Ressort pneumatique selon l'une des revendications 4 ou 5, **caractérisé en ce que** la modification de la section transversale du dispositif d'amortissement (45) s'effectue sur plusieurs niveaux (48, 50).

7. Ressort pneumatique selon l'une quelconque des revendications 4 à 6, **caractérisé en ce que** le passage d'amortissement est réalisé sous la forme d'une rainure longitudinale (45) pratiquée dans une paroi intérieure (20) du corps (1), la largeur et/ou la profondeur de la rainure longitudinale (45) se modifiant pour la variation de la section transversale.

8. Ressort pneumatique selon l'une quelconque des revendications 4 à 6, **caractérisé par** une huile stable à la température en tant que fluide d'amortissement.

9. Ressort pneumatique selon la revendication 8, **caractérisé par** un fluide d'amortissement à base synthétique.

10. Ressort pneumatique selon la revendication 8, **caractérisé par** un fluide d'amortissement à base de silicone.
